# EUROPÄISCHE PATENTSCHRIFT

(11) **EP 1 254 306 B1**
(45) Veröffentlichungstag und Bekanntmachung des Hinweises auf die Patenterteilung: **22.03.2006**
(21) Anmeldenummer: 01915151.3
(22) Anmeldetag: 19.01.2001
(51) Int. Cl.: F01N 3/32, F02D 9/02

(54) **VERFAHREN UND VORRICHTUNG ZUR GLEICHZEITIGEN EINSTELLUNG EINES ANSAUGLUFTSTROMS FÜR EINE BRENNKRAFTMASCHINE UND EINES SEKUNDÄRLUFTSTROMS IN DIE ABGASANLAGE DERSELBEN BRENNKRAFTMASCHINE**
METHOD AND DEVICE FOR SIMULTANEOUS REGULATION OF AN INTAKE AIR FLOW FOR AN INTERNAL COMBUSTION ENGINE AND A SECONDARY AIR FLOW IN THE EXHAUST SYSTEM OF THE SAME INTERNAL COMBUSTION ENGINE
PROCEDE ET DISPOSITIF POUR LE REGLAGE SIMULTANE D'UN FLUX D'AIR D'ASPIRATION POUR UN MOTEUR A COMBUSTION INTERNE ET D'UN FLUX D'AIR SECONDAIRE DANS LE CIRCUIT D'ECHAPPEMENT DU MEME MOTEUR A COMBUSTION INTERNE

(30) Priorität: 10.02.2000 DE 10005888
(43) Veröffentlichungstag der Anmeldung: 06.11.2002
(73) Patentinhaber: Mann + Hummel GmbH, 71638 Ludwigsburg (DE)
(72) Erfinder: PAFFRATH, Holger, 50259 Pulheim (DE); HUMMEL, Karl, Ernst, 74321 Bietigheim-Bissingen (DE); FISCHER, Jochem, 71672 Marbach (DE)
(74) Vertreter: Voth, Gerhard
(86) Internationale Anmeldenummer: PCT/EP2001/000603
(87) Internationale Veröffentlichungsnummer: WO 2001/059273

(56) Entgegenhaltungen:
- WO-A1-97/38212
- DE-A1- 1 476 578
- DE-A1- 4 219 267
- DE-A1- 19 937 781
- US-A- 3 299 629

## Beschreibung

### Stand der Technik

Die Erfindung betrifft ein Verfahren sowie eine zur Durchführung dieses Verfahrens geeignete Brennkraftmaschine, wobei gleichzeitig ein Ansaugluftstrom für die Brennkraftmaschine und ein Sekundärluftstrom zur Einleitung in die Abgasanlage der Brennkraftmaschine hinsichtlich des erforderlichen Massestroms eingestellt wird, nach der Gattung des Patentanspruches 1.

Vorrichtungen der eingangs genannten Art sind bekannt, z. B. aus der WO 97 / 38 212. Gemäß Figur 8 dieses Dokumentes wird ein Sekundärlufteinblassystem für eine Brennkraftmaschine vorgestellt, welches aus einer Turbineneinheit 114 und einem Verdichter 113 besteht. Die Turbine wird über eine Umgehungsleitung angetrieben, die parallel zur Drosselklappe 115 im Ansaugtrakt angeordnet ist. In der Umgehungsleitung zur Turbine ist weiterhin zumindest ein Drosselorgan 120 angeordnet. Die gleichzeitige Einstellung von Ansaugluftstrom und Sekundärluftstrom erfolgt durch das Zusammenspiel von Drosselklappe 115 und Drosselorgan 120. Dabei läßt sich einerseits die Leistung der Turbine 114 und somit auch die von dem Verdichter 113 geförderte Sekundärluft und andererseits der geförderte Ansaugluftstrom als Addition der Luftströme durch das Drosselorgan 120 und die Drosselklappe 115 einstellen.

Zur optimalen Einstellung der beiden Luftströme müssen die komplexen Vorgänge der Brennkraftmaschine bekannt sein. Hieraus kann der aktuelle Luftbedarf im Ansaugtrakt der Brennkraftmaschine bzw. in der Abgasanlage ermittelt werden. Der Luftbedarf der Brennkraftmaschine ist z. B. vom Lastzustand, aber auch von der gewünschten Betriebsart, z. B. der Verbrennung des Kraftstoffes unter Sauerstoffüberschuß oder- mangel abhängig. In die Abgasanlage wird Sekundärluft z. B. in der Kaltstartphase des Motors eingeleitet. Diese soll unvollständig verbrannte Abgasbestandteile oxidieren und durch diese exotherme Reaktion zusätzlich den nachgeschalteten Katalysator in der Abgasanlage aufheizen. Dadurch wird während der Kaltstartphase zum einen der Schadstoffausstoß verringert, zum andern wird die Kaltstartphase verkürzt, da der Katalysator durch die Aufheizung früher zur Wirkung kommt.

Bei der Einleitung der Sekundärluft muß ein bestimmtes Luftverhältnis eingestellt werden, damit die Emisionsreduzierung funktioniert. Bei zuviel Sekundärluft wird das Abgas zu stark abgekühlt, ohne das weitere Abgasbestandteile oxidiert werden. Bei zuwenig Sekundärluft ist nicht ausreichend Sauerstoff zur Oxidation der Abgasbestandteile vorhanden.

Die DE-A-4219267 zeigt ein System zur Sekundärlufteinblasung bei Brennkraftmaschinen. Es wird ein Verfahren offenbart, bei dem gleichzeitig Ansaugluftstrom und Sekundärluftstrom eingestellt werden können. Dieses erfolgt bevorzugt über ein Schalten eines Umschaltventils in Abhängigkeit eines Signals eines Steuergerätes.

Aufgabe der Erfindung ist es, Verfahren zu schaffen, welche mittels einfacher Prinzipien eine befriedigende Einstellung von Sekundärluftstrom und Ansaugluftstrom für die Brennkraftmaschine ermöglicht. Außerdem ist es Aufgabe der Erfindung, geeignete Vorrichtungen für dieses Verfahren zu schaffen. Diese Aufgabe wird durch die Patentansprüche 1 und 4 gelöst.

### Vorteile der Erfindung

Das erfindungsgemäße Verfahren ist in bekannter Weise zur gleichzeitigen Einstellung des Ansaugluftstroms der Brennkraftmaschine und des Sekundärluftstroms in die Abgasanlage der Brennkraftmaschine geeignet. Die Einstellung der Luftströme erfolgt über eine Variation des Massenstromes. Im Ansaugtrakt der Brennkraftmaschine ist eine Drosselklappe untergebracht, wobei diese nur den Massestrom der Ansaugluft im Ansaugtrakt beeinflussen kann. Bei der Einstellung des Ansaugluftstroms muß weiterhin der Umgehungsluftstrom beachtet werden, der zum Antrieb einer Turbine vor der Drosselklappe abgezweigt und hinter der Drosselklappe wieder dem Ansaugtrakt zugeführt wird. Die Turbine treibt einen Verdichter an, der den Sekundärluftstrom erzeugt. Dieser wird der Abgasanlage zugeführt, wobei z. B. eine Zuführung vor dem Katalysator sinnvoll ist, um die bereits beschriebenen Effekte für das Abgas in der Kaltstartphase des Motors zu erzielen.

Die Erfindung ist dadurch gekennzeichnet, daß zumindest im Leerlauf der Brennkraftmaschine die Drosselklappe eine für diesen Zustand festgelegte Stellung einnimmt. Dies geschieht vor dem Hintergrund, daß im Leerlauf der Brennkraftmaschine der Luftbedarf bekannt ist. Durch Einstellen der Drosselklappe in eine feste Position und das bekannte Ansaugverhalten der Brennkraftmaschine im Leerlauf kann somit gleichzeitig eine definierte Turbinenleistung erreicht werden. Die Drosselklappe muß derart eingestellt werden, daß der Ansaugluftstrom, der an der Drosselklappe vorbeistreicht in Addition mit dem Umgehungsluftstrom gerade die für den Leerlauf der Brennkraftmaschine notwendige Luftmenge ergibt. Hierdurch kann erreicht werden, daß in diesem Betriebszustand die Brennkraftmaschine mit der vorgesehenen Drehzahl läuft. Schwankungen in der zugeführten Ansaugluftmenge würden sich nämlich in einer ungleichmäßigen Drehzahl der Brennkraftmaschine auswirken.

Die für den Leerlauf sinnvolle Klappenstellung im Verhältnis zum in der Umgehungsleitung geförderten Luftstrom muss für die Brennkraftmaschine ermittelt werden. Hierzu kann zusätzlich ein Drosselorgan verwendet werden, welches in der Umgehungsleitung angeordnet wird und mit Hilfe dessen der Luftstrom an der Turbine beeinflußt werden kann. Die bekannten Verhältnisse im Leerlauf der Brennkraftmaschine machen in diesem Bereich also eine Regelung oder Steuerung der Ansaugluftmenge überflüssig. In diesem Betriebszustand sind auch kleine Abweichungen von der eigentlich gewünschten Ansaugluftmenge besonders kritisch, da die Brennkraftmaschine sofort mit einer Drehzahländerung hierauf reagiert. In anderen Betriebszuständen sind Abweichungen von der gewünschten Ansaugluftmenge bzw. Sekundärluftmenge von geringerer Bedeutung. Diese können also ohne Vorsehen einer zusätzlichen Regelung durch bestimmte Gesetzmäßigkeiten zwischen den einzelnen Stellorganen wie der Drosselklappe im Ansaugtrakt und dem Drosselorgan in der Umgehungsleitung eingestellt werden, wie im folgenden genauer erläutert werden wird. Dies wirkt sich positiv auf die Wirtschaftlichkeit des vorgeschlagenen Verfahrens aus, da zusätzliche Regelbauteile überflüssig werden. Die Drosselklappenstellung kann z. B. über die ohnehin vorhandene Motorsteuerung betrieben werden.

Gemäß einer weiteren Ausgestaltung der Erfindung ist die festgelegte Stellung der Drosselklappe im Leerlaufzustand gerade die Schließstellung derselben. In diesem Fall wird die Ansaugluft für die Brennkraftmaschine ausschließlich durch die Umgehungsleitung gefördert. Dabei kann die Turbine als Stellorgan für eine Regelung der Ansaugluftmenge im Leerlauf genutzt werden. Dies wird dadurch möglich, daß der Luftdurchsatz durch die Turbine abhängig von der Leistungsaufnahme des Verdichters ist, wobei hierbei beachtet werden muß, daß die Verdichterleistung gleichzeitig den Massestrom der Sekundärluft beeinflußt.

Gemäß einer Weiterbildung der Erfindung soll die Schließstellung der Drosselklappe solange beibehalten werden, wie der benötigte Ansaugluftstrom der Brennkraftmaschine unterhalb des maximal möglichen Umgehungsluftstroms an der Turbine liegt. Dies ist nämlich die Bedingung dafür, daß der Luftbedarf der Brennkraftmaschine ausschließlich über die Umgehungsleitung gedeckt werden kann. Damit steht in diesen Betriebszuständen immer die maximal mögliche Turbinenleistung zur Verfügung. Diese kann somit in einem möglichst großen Sekundärluftstrom umgewandelt werden, was die Variationsmöglichkeiten der zugeführten Sekundärluftmenge in die Abgasanlage vergrößert.

Um bei zu großer Turbinenleistung im Falle einer vollständigen Schließstellung der Drosselklappe eine befriedigende Einstellung des Sekundärluftstromes zu erreichen, kann in der Sekundärluftleitung gemäß einer besonderen Ausgestaltung der Erfindung ein Drosselventil vorgesehen werden. Durch dieses läßt sich der Sekundärluftstrom vermindern, wenn die aktuell geförderte Luftmasse für den augenblicklichen Betriebszustand der Brennkraftmaschinen zu groß ist. Dieser Effekt läßt sich vorteilhaft auch durch eine Zusatzleitung erreichen, die den Verdichter umgeht. Diese ist drosselbar ausgeführt, und kann auch vollständig verschlossen werden. Im Falle einer Öffnung wird ein Luftstrom in der Zusatzleitung erzeugt, der dem Förderstrom des Verdichters entgegengerichtet ist, und bei gleichbleibender Verdichterleistung den effektiv geförderten Sekundärluftstrom an der Zuführung zur Abgasanlage verringert.

Die Zusatzleitung ist insbesondere dazu geeignet, den Sekundärluftstrom unabhängig von der Turbinenleistung zu vermindern. Hierbei muß beachtet werden, daß Verdichterleistung sowie Turbinenleistung direkt miteinander gekoppelt sind. Wird der Sekundärluftstrom durch eine Drossel in der Sekundärluftleitung vermindert, hat dies somit auch eine Verminderung des Luftdurchsatzes an der Turbine zur Folge. Diese muß für den Fall, daß die Brennkraftmaschine eine größere Luftmenge benötigt durch eine Verstellung der Drosselklappe im Ansaugtrakt aufgefangen werden. Damit zeigt sich auch, daß ein in der Sekundärluftleitung vorhandenes Drosselventil indirekt gleichzeitig zu einer Drosselung des Nebenluftstroms an der Turbine führt. In diesem Fall kann eine Drosselung des Nebenluftstroms entfallen.

Eine Brennkraftmaschine, an der das erfindungsgemäße Verfahren realisiert werden soll muß zumindest die folgenden bekannten Komponenten aufweisen. Es muß eine Abgasanlage mit einem Katalysator vorgesehen sein, da der Katalysator die Sekundärlufteinleitung erst notwendig macht. Um die Sekundärluft einleiten zu können, muß weiterhin eine Zuführung vorgesehen sein. Im Ansaugtrakt der Brennkraftmaschine muß eine Drosselklappe vorhanden sein, wobei über eine Umgehungsleitung eine Turbine parallel zur Drosselklappe angeordnet ist, die ebenfalls von der Ansaugluft durchströmt werden kann. Die Turbine ist mit einem Verdichter mechanisch gekoppelt, wodurch die Turbinenleistung in eine Förderleistung des Verdichters zur Einleitung der Sekundärluft in die Abgasanlage genutzt werden kann. Weiterhin müssen Mittel zur Durchführung des bereits beschriebenen Verfahrens vorgesehen werden.

Diese Mittel können z. B. aus einem Drosselorgan bestehen, welches in der Umgehungsleitung angeordnet ist und wiederum mit der Drosselklappe im Ansaugtrakt mechanisch gekoppelt ist. Durch diese mechanische Kopplung wird eine feste Gesetzmäßigkeit erzeugt, wie sich die Öffnungsverhältnisse der beiden Drosselorgane zueinander verhalten. Insbesondere ist ein linearer Zusammenhang erreichbar, der dem Umstand Rechnung trägt, daß ein gesteigerter Luftbedarf der Brennkraftmaschine durch einen erhöhten Massestrom des Abgases eine erhöhte Sekundärluftzuleitung erfordert. Der Sekundärluftmassestrom kann damit im Wesentlichen konstant gehalten werden Das Drosselorgan für die Umgehungsleitung kann z. B. aus einer Schiebeblende bestehen, welche an der Wand des Ansaugtraktes hin und her geschoben werden kann und auf diese Weise eine Verbindungsöffnung zwischen Umgehungsleitung und Ansaugtrakt öffnen und verschließen kann. Die Schiebeblende kann stufenlos verstellt werden, wodurch auch ein teilweiser Verschluß der Umgehungsleitung möglich wird. Hierdurch kommt die Drosselwirkung zustande. Es ist auch denkbar, daß die Schiebeblende mehrere Durchgänge aufweist, die sich schrittweise vor die Verbindungsöffnung schieben. Es können auch mehrere Verbindungsöffnungen angeordnet sein, wobei in diesem Falle eine Verzweigung der Umgehungsleitung zu den Verbindungsöffnungen hin notwendig ist. Ein Antrieb der Schiebeblende kann z. B. über eine Zahnstange realisiert sein, die an dieser angebracht ist. Die mechanische Kopplung der Drosselklappe wird z. B. über ein Zahnrad realisiert, welches auf der Drosselklappenwelle angebracht ist, und mit der Zahnstange im Eingriff steht.

Mit der beschriebenen Ausführungsform läßt sich insbesondere ein linearer Zusammenhang zwischen Drosselklappe im Ansaugtrakt und Drosselorgan in der Umgehungsleitung herstellen. Selbstverständlich sind auch andere Getriebe denkbar, die unter anderem auch einen degressiven oder progressiven Zusammenhang zwischen Drosselklappenstellung und Drosselorganstellung bewirken können. Hierdurch können spezielle Ansaugcharakteristiken für Brennkraftmaschinen erzielt werden, die im Einzelfall auf die vorgegebenen Gegebenheiten des Motors angepaßt werden können.

Eine andere Variante für das Drosselorgan in der Umgehungsleitung wird realisiert, indem ein Regelventil zur Drosselung eingesetzt wird. Dieses Regelventil kommuniziert über eine Verbindungsleitung mit der Sekundärluftleitung, so daß über einen Regelanschluß im Ventil die Information des in der Sekundärluftleitung anliegenden Verdichterdruckes in das Ventil eingespeist werden kann. Der Sekundärluftdruck kann somit direkt als Regelgröße verwendet werden, um z. B. durch eine entsprechende Verstellung des Regelventils die Turbinenleistung derart zu beeinflussen, daß ein konstanter Sekundärluftdruck entsteht. Sobald der Sekundäduftdruck über den gewünschten Wert steigt, wird das Regelventil in der Umgehungsleitung gedrosselt, wodurch die Turbinenleistung und somit auch die Verdichterleistung abfällt, was zu einem geringeren Sekundärluftdruck führt. Dabei kann das Regelventil derart ausgelegt werden, daß eine evtl. Druckpulsation in der Sekundärluftleitung bzw. der Umgehungsleitung durch Dämpfungsfaktoren aufgefangen werden, die mit der Gestaltung des Regelventils zusammenhängen.

Im Falle der Verwendung des beschriebenen Regelventils hängt dessen Stellung allein von dem geforderten Sekundärluftdruck ab. Um gleichzeitig eine optimale Versorgung der Brennkraftmaschine mit Ansaugluft zu gewährleisten muß der Ansaugluftstrom daher über die Stellung der Drosselklappe reguliert werden. Eine andere Möglichkeit besteht darin, daß Regelventil auch durch den im Ansaugtrakt vorliegenden Druck anzusteuern, wodurch dieser als zusätzliche Einflußgröße das Verhalten des Regelventils zwecks Findung einer Stellung beeinflußt, die einen Kompromiß hinsichtlich der geforderten Masseströme in der Sekundärluftleitung und im Ansaugkanal der Brennkraftmaschine darstellt. Auch in diesem Fall können die Randbedingungen der im Leerlauf befindlichen Brennkraftmaschine als bekannt vorausgesetzt werden, so daß die Drosselklappe eine für diesen Betriebszustand sinnvolle Stellung einnimmt.

Gemäß einer weiteren Ausgestaltung der Erfindung kann das eingangs beschriebene Verfahren mittels einer Steuereinheit erreicht werden, die zumindest einen Eingang für einen Sensor in der Sekundärluftleitung einen Eingang für einen Lagersensor an der Drosselklappe und einen Ausgang für ein Steuersignal für ein Steuerventil zur Steuerung der Sekundärluftmenge aufweist. Der Sensor in der Sekundärluftleitung kann zur Aufnahme des in der Sekundärluftleitung vorliegenden Druckes oder auch des Mengendurchsatzes an Sekundärluft ausgelegt sein. Das entsprechende Sekundärluftsignal kann von der Steuerung ausgewertet werden und gibt indirekten oder direkten Aufschluß über die dem Ansaugtrakt zugeführte Menge an Sekundärluft. In modernen Brennkraftmaschinen ist eine Lageerkennung für die Drosselklappe vorgesehen, um eine optimale Motorsteuerung zu erreichen. Diese Lageerkennung kann gleichzeitig durch die Steuereinheit für das Sekundärluftsystem verwendet werden, um einen indirekten Aufschluß über die durch das Ansaugsystem ansaugbare Luftmenge zu erhalten. Die Lagererkennung kann beispielsweise mittels Sensoren wie z. B. Potenziometern erfaßt werden. Wird zum Antrieb der Drosselklappe ein Schrittmotor verwendet, so liefert dieser gleichzeitig Informationen über die Drosselklappenstellung, so daß ein zusätzlicher Sensor entfallen kann.

Die Einganssignale werden verwendet, um in der Steuereinheit ein Ausgangssignal zu erzeugen, welches die Stellung des Steuerventils beeinflußt. Wie bereits erläutert, ist wegen der mechanischen Kopplung von Turbine und Verdichter eine Unterbringung des Steuerventils sowohl in der Umgehungsleitung als auch in der Sekundär luftleitung möglich. Eine zunehmende Drosselung des Steuerventils führt zu einer Verminderung des Sekundärluftstroms sowie des Nebenluftstroms.

Mit Hilfe der Informationen über die Stellung des Steuerventils sowie der Drosselklappe ist gleichzeitig ein Rückschluß über die der Brennkraftmaschine über den Ansaugtrakt zugeführten Verbrennungsluft möglich.

Die bisher beschriebenen Verfahren sowie Vorrichtungen zur Einstellung von Ansaugluftstrom und Sekundärluftstrom gestatten auf verschiedene Weise eine Annäherung an die real in der Brennkraftmaschine ablaufenden Prozesse. Durch die Annäherung wird eine Steuerung bzw. Regelung der benötigten Sekundärluft sowie Ansaugluft hinreichend genau beschrieben, so daß der Aufwand für die Einstellung der Luftströme in Grenzen gehalten werden kann. Dabei wird dem Haupteinflußfaktor des Systems Rechnung getragen. Dieser Einflußfaktor ist die Drosselklappe im Ansaugtrakt. Solange diese nämlich geschlossen ist, muß der gesamte Ansaugluftstrom über die Umgehungsleitung geführt werden, was zu einer hohen Turbinenleistung führt. Sobald dieser Luftstrom nicht mehr ausreicht, wird die Drosselklappe im Ansaugtrakt geöffnet, was zu einem schlagartigen Abfall der Turbinenleistung führt. Unter diesen Bedingungen ist eine Versorgung der Abgasanlage mit Sekundärluft nicht mehr gegeben. Die Verstellbarkeit des Querschnitts der Umgehungsleitung bzw. der Sekundärluftleitung führt jedoch zu einer zusätzlichen Einstellbarkeit des Sekundärluftstroms. Damit kann bei einem Öffnen der Drosselklappe im Ansaugtrakt gleichzeitig eine Verringerung des Strömungswiderstandes Sekundärluftsystems eingeleitet werden. Damit kann der Leistungsabfall an der Turbine vermieden oder zumindest verringert werden, da der Massestrom in der Umgehungsleitung aufgrund des sich verringernden Strömungswiderstandes annähemd konstant gehalten werden kann. Die Verringerung des Durchströmungswiderstandes wird z. B. durch die bereits beschriebenen Drosselorgane in der Sekundärluftleitung bzw. der Umgehungsleitung erzielt.

Sollten die beschriebenen Einstellmechanismen einmal nicht ausreichen, um die Förderung von genügend Sekundärluft in die Abgasanlage zu gewährleisten, kann zusätzlich eine Reduzierung der Kraftstoffzufuhr in den Ansaugtrakt erzielt werden. Dadurch wird das Gemisch magerer, so daß eine weitgehende Verbrennung schon in der Brennkraftmaschine erfolgen kann. Dadurch wird auch für diesen Fall eine Einhaltung der Abgaswerte der Brennkraftmaschine erreicht.

Die Ansteuerung des Sekundärluftsystemes muß nicht durch eine gesonderte Steuereinheit erfolgen. Die Funktionen können auch in die Motorsteuerung integriert sein, wodurch die Wirtschaftlichkeit der vorgeschlagenen Lösung erhöht wird. Insbesondere stehen der Motorsteuerung diverse Meßwerte der Brennkraftmaschine zur Verfügung, die nicht zusätzlich erfaßt werden müssen. Weitere Meßwerte können zusätzlich zu einer Verfeinerung des beschriebenen Einstellverfahrens für das Sekundär luftsystem herangezogen werden.

Die einwandfreie Funktion des Sekundärluftsystem hängt im wesentlichem Maße auch von der Auslegung der Einzelkomponenten ab. So ist der Sekundärluftlader so auszulegen, daß im Motorleerlauf der erforderliche Sekundärluftmassenstrom durch den Verdichter gefördert werden kann. Da der Luftbedarf des Motors in diesem Betriebszustand gering ist und diese geringe Luftmenge zwecks Erreichung der Leerlaufdrehzahl eingehalten werden muß, hängt die Drosselung der Turbine von diesen Randbedingungen ab. Sollte der Verdichtermassenstrom bei derart angedrosselter Turbine zu gering sein, muß die Grundauslegung des Sekundärluftladers, speziell der Turbine überarbeitet werden. Wird die Turbine kleiner ausgelegt, kann die Drosselung der Turbine reduziert werden und das Turbinendruckverhältniss erhöht sich. Bei gleichem Turbinenmassenstrom wird dann mehr Turbinenleistung erzeugt und ein höherer Verdichtermassenstrom gefördert. Der Ist-Wert des Sekundärluftmasssenstroms wird durch einen Sensor in der Sekundärluftleitung oder in der Abgasanlage bestimmt. Hierbei können z. B. Durchflusssensor verwendet werden, wobei diese in der Abgasanlage häufig ohnehin vorgesehen werden müssen. Z. B. würde ein Vergleich der Luftdurchsätze vor und hinter der Einleitung für die Sekundärluft einen Rückschluß auf die zugeführte Sekundärluftmenge zulassen. Alternativ kann auch ein Differenzdruck an einer bekannten Drosselstelle ausgewertet werden. Der Sollwert für den Sekundärluftmassenstrom kann z. B. durch die Motorsteuerung bestimmt werden. Dazu kann der Motorluft- und Brennstoffmassestrom ausgewertet werden. Die Steuereinheit paßt durch Anwendung des beschriebenen Verfahrens den Sekundärluftmassenstrom an den gewünschten Sollwert an.

Das beschriebene Verfahren eignet sich also in besonderer Weise dazu, den Massestrom des Sekundärluftstromes zu regulieren. Gemäß einer besonderen Ausgestaltung der Erfindung läßt sich der so erzeugte Sekundärluftmassestrom nicht nur für die Brennkraftmaschine in der Kaltstartphase verwenden. Hierzu wird die Sekundärluft der Abgasanlage vor dem Katalysator zugeführt. Dies kann zentral direkt vor dem Katalysator oder auch in den Auslaßkanälen der Zylinder erfolgen. Für den Fall, daß die Sekundärluft nahe den Zylinderauslässen eingeleitet wird, ist eine bessere Verteilung der Sekundärluft im Abgas möglich, da dieses noch einen gewissen Weg bis zum Katalysator zurücklegen muß.

Die Sekundärluft kann jedoch auch hinter dem Katalysator eingeleitet werden. Diese Zuleitungsmöglichkeit schafft einen weiteren Anwendungsfall, wobei ein Stellorgan vorgesehen ist, welches die Leitung der Sekundärluft zu den unterschiedlichen Zuführungen auswählen kann.

Der Anwendungsfall für die Zuführung der Sekundärluft hinter dem Katalysator ergibt sich bei mager betriebenen Verbrennungsmotoren, insbesondere direkt eingespritzten Otto-Motoren, welche mit sogenannten Speicherkatalysatorsystemen für Stickoxyde ausgestattet sind. Diese speziellen Katalysatoren sollen die Schadstoffemission innerhalb der vorgeschriebenen Grenzen halten. Sie speichern die Stickoxyde in mageren Betriebspunkten und geben den Stickstoff in fetten Betriebspunkten ab. Mit mager und fett sind die Betriebszustände gemeint, in denen mehr bzw. weniger Kraftstoff der Verbrennungsluft beigemischt wird. Im mageren Betrieb verbrennt der Kraftstoff in den Zylindern mit Luftüberschuß, während in fetten Betriebspunkten ein Kraftstoffüberschuss in die Zylinder eingespritzt wird.

Allerdings kann der aus dem Kraftstoff stammende Schwefel die beschriebene Wirkung der Speicherkatalysatoren einschränken. Dies geschieht durch eine Sulfateinlagerung im Katalysator, die dessen Laufzeit stark vermindern kann.

Die Sulfateinlagerung ist jedoch in gewissen Grenzen reversibel. Dazu muß der Motor über längere Zeit im Minutenbereich fett und bei hohen Abgastemperaturen betrieben werden. Dadurch läßt sich eine Reinigung des Katalysators von Sulfateinlagerungen erzielen, jedoch steigen die Emissionswerte des Abgases an Kohlenmonoxid und Kohlenwasserstoffes auf nicht hinzunehmende Werte. Durch Einleitung von Sekundärluft stromab der zu desulfatisierenden Komponente können diese Schadstoffe entsprechend dem Prozeß in der Kaltstartphase der Brennkraftmaschine verbrannt werden. Dadurch läßt sich eine Reinigung des Katalysators bei hinnehmbaren Emissionswerten erreichen.

Zur Erzeugung des Betriebszustandes der Desulfatisierung des Katalysators läßt sich das beschriebene Sekundärluftsystem verwenden. Hierbei kann der Umstand ausgenutzt werden, daß die Betriebszustände des Kaltstarts und der Desulfatisierung niemals gleichzeitig auftreten. Die Kaltstartphase beträgt nach dem Start des Motors lediglich wenige Minuten. In den fetten Betriebspunkten des Motors, welche für eine Desulfatisierung des Katalysators Voraussetzung sind, ist die Drosselklappe im Ansaugtrakt mindestens teilweise geschlossen. Daher kann der Turbine des Sekundärluftladers genügend Umgehungsluft zur Verfügung gestellt werden, um eine hinreichende Menge an Sekundärluft durch den Verdichter zur Verfügung zu stellen.

Selbstverständlich lassen sich auch andere Sekundärluftsysteme, die z. B. ein elektrisch angetriebenen Verdichter zur Desulfatisierung des Katalysators nutzen. Bei der Auslegung des Sekundärluftladers ist lediglich darauf zu achten, daß dieser die geforderten Sekundärluftmengen sowohl in der Kaltstartphase als auch während der Desulfatisierung bereitstellen kann. Der Sekundärluftlader muß also für den Betriebsstand mit dem höheren Sekundärluftbedarf ausgelegt werden. Die Höhe des Sekundärluftbedarfs hängt im Einzelfall von der Brennkraftmaschine ab.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Ausführungsbeispielen beschrieben. Hierbei zeigen
- Figur 1: die schematische Darstellung eines Sekundärluftsystemes mit mechanischer Kopplung zwischen Drosselklappe im Ansaugtrakt und Drosselorgan in der Umgehungsleitung,
- Figur 2: die schematische Darstellung eines Sekundärluftsystems mit Regelventil und
- Figur 3: die schematische Darstellung eines Sekundärluftsystems mit elektronisch gesteuertem Steuerventil in der Umgehungsleitung.

### Beschreibung der Ausführungsbeispiele

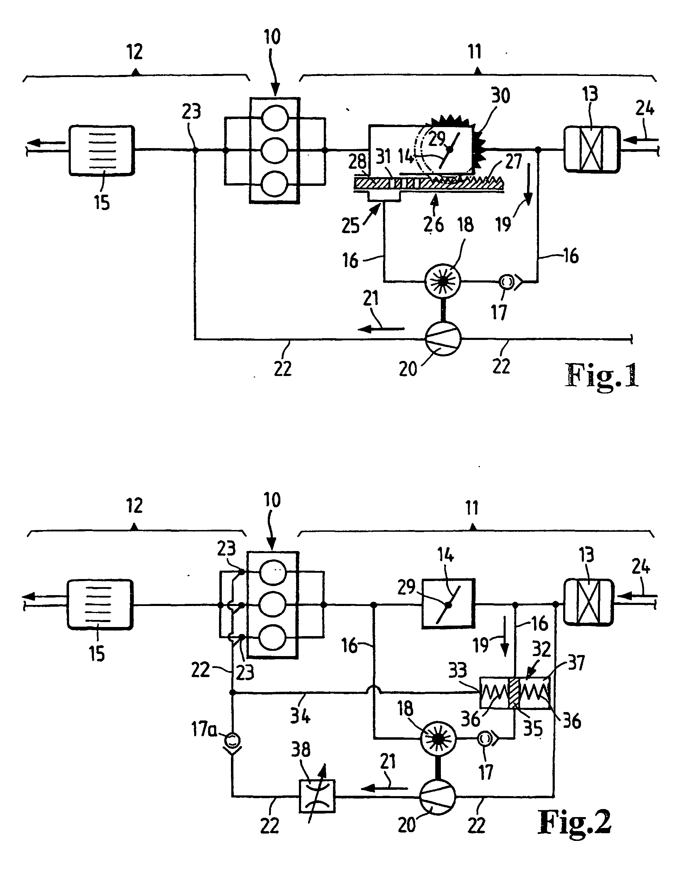

In Figur 1 ist eine Ausführungsform dargestellt, welche mit einem minimalen Aufwand an Komponenten auskommen soll. Es ist eine Brennkraftmaschine 10 vorgesehen, welche mit einem Ansaugtrakt 11 und einer Abgasanlage 12 ausgestattet ist. Im Ansaugtrakt befindet sich zumindest ein Luftfilter 13 und eine Drosselklappe 14. Die Abgasanlage ist mit einem Katalysator 15 ausgestattet. Hinter dem Luftfilter 13 und vor der Drosselklappe 14 zweigt eine Umgehungsleitung 16 ab, die dem Ansaugtrakt 11 hinter der Drosselklappe wieder zugeführt wird. In der Umgehungsleitung ist ein Rückschlagventil 17 vorgesehen, welches einen Rückfluß an Verbrennungsluft durch die Umgehungsleitung vermeidet. Weiterhin ist eine Turbine 18 in der Umgehungsleitung 16 angeordnet, die durch einen Umgehungsluftstrom 19 angetrieben wird. Die Turbine ist mechanisch mit einem Verdichter 20 gekoppelt, der einen Sekundärluftstrom 21 in einer Sekundärluftleitung 22 fördert. Die Sekundärluftleitung mündet in eine Zuführung 23 der Abgasanlage 12 vor dem Katalysator 15. Die Flußrichtungen eines Ansaugluftstromes 24 des Umgehungsluftstromes 19 und des Sekundärluftstromes 21 sowie des Abgases sind durch Pfeile entlang der Leitungen angedeutet.

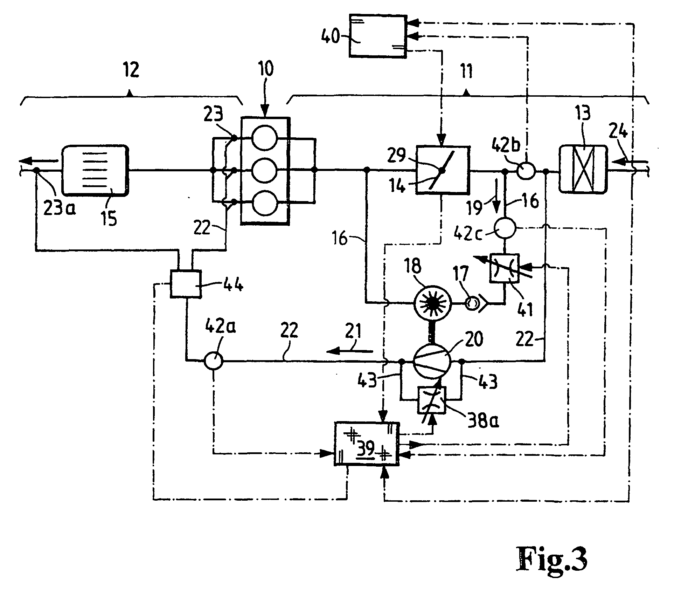

Die bisher beschriebenen Elemente befinden sich in den Ausführungsformen gemäß Figur 2 und 3 wieder und werden an dieser Stelle nicht nochmals erläutert.

Das Ausführungsbeispiel gemäß Figur 1 besitzt für die Umgehungsleitung 16 ein Drosselorgan 25, welches mit der Drosselklappe 14 mechanisch gekoppelt ist. Diese Kopplung kommt durch einen Zahnstangenantrieb 26 zustande, wobei eine Zahnstange 27 als Teil einer Schiebeblende 28 ausgeführt ist und eine Klappenwelle 29 der Drosselklappe 14 mit einem Zahnrad 30 verbunden ist, welches mit der Zahnstange 27 in Verbindung steht. Bei Verstellung der Drosselklappe wird somit auch die Schiebeblende bewegt, wodurch Verbindungsöffnungen 31 geöffnet und verschlossen werden. Diese sind im Ausführungsbeispiel als Bohrungen in der Schiebeblende ausgeführt. Ebenso denkbar ist eine Verbindungsöffnung, die als Durchbruch in der Wand des Ansaugtraktes ausgeführt ist, wobei die Schiebeblende sich über diese Verbindungsöffnung schiebt, um diese stufenlos zu verschließen. Diese Ausführung ist nicht dargestellt.

Im Sekundärluftsystem gemäß Figur 2 ist ein Regelventil 32 in der Umgehungsleitung 16 angeordnet, welche den Umgehungsluftstrom 19 stufenlos zu variieren vermag. Das Regelventil besitzt einen Regelanschluß 33, der mit einer Verbindungsleitung 34 mit der Sekundärluftleitung 22 verbunden ist. Abhängig von dem in der Sekundärluftleitung 22 herrschenden Druck wird damit das Regelventil 32 verstellt. Ein Ventilkörper 35 schiebt sich dabei in den Leitungsquerschnitt der Umgehungsleitung, wodurch der Umgehungsluftstrom 19 direkt beeinflußt wird. Der Stellweg des Ventils in Abhängigkeit der Druckänderung des Sekundärluftstroms 21 wird durch Federn 36 bestimmt. Außerdem kann in dem Regelventil 32 eine Dämpfung realisiert sein, die durch die Dämpfungseigenschaften eines in einem Volumen 37 eingeschlossenen Fluides bestimmt wird. Zur Einleitung des Sekundärluftstroms 21 in die Abgasanlage sind mehrere Zuführungen 23 vorgesehen, die direkt hinter den zylinderseitigen Auslässen für die Abgase angeordnet sind. Hierdurch findet eine optimale Durchmischung der Sekundärluft mit den Abgasen statt. Weiterhin ist in der Sekundärluftleitung ein Drosselventil 38 vorgesehen, mit dessen Hilfe der Sekundärluftstrom verringert oder abgeschaltet werden kann. Weiterhin kann in der Sekundärluftleitung ein Rückschlagventil 17a vorgesehen werden, die eine Abgasrückführung in den Ansaugtrakt 11 bei bestimmten Betriebsbedingungen unterbindet. Anstelle des Drosselventils 38 kann auch ein Schaltventil vorgesehen werden, mit dessen Hilfe die Sekundärlufteinleitung abgeschaltet werden kann. Im vorliegenden Ausführungsbeispiel wird die Sekundärluft dem Ansaugtrakt 11 der Brennkraftmaschine hinter dem Luftfilter 13 entnommen. Hierdurch wird gewährleistet, daß die Sekundärluft keine Verunreinigungen aufweist. Grundsätzlich kann die Sekundärluft jedoch auch aus dem Motorraum angesaugt werden, wie dies in Figur 1 angedeutet ist.

In dem Ausführungsbeispiel gemäß Figur 3 ist das Sekundärluftsystem mit einer Steuereinheit 39 ausgestattet, welche mit einer Motorsteuerung 40 kommuniziert. Für die Steuerung des Ventils können Kennfelder in der Steuereinheit 39 abgelegt sein, die die Verarbeitung diverser Meßwerte des Sekundärluftsystems und des Motors ermöglichen. Es werden zumindest der Mengendurchsatz des Sekundärluftstroms 21 mit Hilfe eines Sensors 42a und die Drosselklappenstellung ermittelt. An Stelle des Sensors 42a kann auch ein Sensor 42c vorgesehen werden, der den Luftstrom auf der Turbinenseite misst. Durch die mechanische Kopplung zwischen Verdichter 20 und Turbine 18 ist damit auch ein Rückschluss auf den Sekundärluftstrom möglich. Weiterhin können Informationen der Motorsteuerung einfließen, wie z. B. der Mengendurchsatz an Verbrennungsluft im Ansaugtrakt 11, gemessen durch den Sensor 42b. Die Stellung der Drosselklappe ist häufig auch in der Motorsteuerung abgelegt, so daß eine gesonderte Messung durch die Steuereinheit 39, wie in diesem Ausführungsbeispiel gezeigt, nicht erfolgen muß. Die verwendeten Sensoren können z. B. Durchflusssensoren sein, mit deren Hilfe der Mengendurchsatz der Luftströme gemessen werden kann. Eine andere Möglichkeit ist die Verwendung von Drucksensoren, die durch Messungen des Druckes einen indirekten Schluß auf den Mengendurchsatz zulassen.

Die Steuereinheit dient zur gleichzeitigen Ansteuerung des Steuerventils 41 und eines Drosselventils 38a. Das Steuerventil regelt den Umgehungsluftstrom 19, während das Drosselventil 38a zur Regulierung des effektiven Sekundärluftstroms gedacht ist. Das Drosselventil 38a ist nämlich in einer Zusatzleitung 43 vorgesehen, die einen Bypass für den Verdichter bildet. Dadurch kann durch Öffnung des Drosselventils 38a und Rückführung der verdichteten Luft der effektive Sekundärluftstrom reguliert werden.

Neben den Zuführungen 23 zur Sekundärlufteinblasung während der Kaltstartphase ist weiterhin eine Zuführung 23a vorgesehen, die hinter dem Katalysator in die Abgasanlage 12 mündet. Durch ein Stellorgan 44 kann die Zuführung 23 oder die Zuführung 23a mit der Sekundärluftleitung verbunden oder abgekoppelt werden. Eine gleichzeitige Zuschaltung beider Zuführungen 23, 23a ist nicht vorgesehen. Die Zuführung 23a für die Sekundärluft ist für den Betriebszustand der Desulfatisierung des Katalysators 15 gedacht.

## Patentansprüche

1. Verfahren zur gleichzeitigen Einstellung
- eines Ansaugluftstromes (24) für eine Brennkraftmaschine (10) mit Hilfe einer im Ansaugtrakt (11) untergebrachten Drosselklappe (14) unter Beachtung eines Umgehungsluftstromes (19), der durch eine mit der Drosselklappe parallel geschaltete Turbine (18) geleitet wird und somit Teil des Ansaugluftstromes ist, und
- eines Sekundärluftstromes (21), der durch einen durch die Turbine (18) angetriebenen Verdichter (20) erzeugt wird und einer Abgasanlage (12) der Brennkraftmaschine zugeführt wird, wobei die Abgasanlage einen Katalysator aufweist,
**dadurch gekennzeichnet, dass** in einem Steuergerät (39) ein Sekundärluftsignal von einem Sekundärluftleitungssensor (42a) und ein Signal über die Lage der Drosselklappe (14) aufgenommen wird wobei diese Signale in dem Steuergerät (39) ausgewertet werden und in Abhängigkeit der Auswertung im Steuergerät (39) der Sekundärtuftstrom (21) durch das Steuergerät mittels eines Steuerventils (38a) gesteuert wird.

2. Verfahren nach Anspruch 1, **dadurch gekennzeichnet, dass** bei einer Öffnung der Drosselklappe (14) bei steigendem Luftbedarf der Brennkraftmaschine das Steuerventil (38a, 41) ebenfalls geöffnet wird um eine ausreichende Sekundärluftversorgung sicherzustellen.

3. Verfahren nach Anspruch 2, **dadurch gekennzeichnet, dass** bei nicht ausreichendem Sekundärluftstrom (21) die Kraftstoffzufuhr der Brennkraftmaschine reduziert wird.

4. Verfahren nach einem der vorhergehenden Ansprüche, **dadurch gekennzeichnet, dass** der Sekundärluftstrom (21) mittels eines Stellorgans (44) vor oder nach dem Katalysator der Abgasanlage (12) hinzugeführt wird.

5. Brennkraftmaschine (10) mit einem Ansaugtrakt (11) und einer Abgasanlage (12),
wobei
- die Abgasanlage einen Katalysator (15) und mindestens eine Zuführung (12) für eine Sekundärluftleitung (22) aufweist,
- der Ansaugtrakt eine Drosselklappe (14) und eine zur Drosselklappe parallel verlaufende Umgehungsleitung (16) aufweist, in der eine Turbine (18) durchströmbar angeordnet ist,
- die Turbine (18) mit einem Verdichter (20), an dessen Ausgang für die verdichtete Luft die Sekundärluftleitung angeschlossen ist, mechanisch gekoppelt ist, **dadurch gekennzeichnet, dass**
eine Steuereinheit (39) vorgesehen ist, die zumindest
- einen Eingang für ein Sekundärluftsignal oder ein Umgehungsluftsignal, welcher mit einem Sensor (42a) in der Sekundärluftleitung (22) oder einem Sensor (42c) in der Umgehungsleitung (16) verbunden ist,
- einen Eingang für ein von einer Lageerkennung an der Drosselklappe (14) stammendes Stellungssignal und
- einen Ausgang für ein Steuersignal, welcher mit einem Steuerventil (41,38a) verbunden ist, aufweist, wobei,
- das Steuerventil in der Umgehungsleitung (16) oder in der Sekundärluftleitung (22) angebracht ist, derart, dass über eine Auswertung der eingehenden Signale der Sekundärluftstrom (21) gesteuert wird.

6. Brennkraftmaschine nach Anspruch 5, **dadurch gekennzeichnet, dass** der Sensor (42a, 42c) in der Sekundärluftleitung (22) ein Drucksensor ist.

7. Brennkraftmaschine nach Anspruch 5, **dadurch gekennzeichnet, dass** der Sensor (42a, 42c) in der Sekundärluftleitung (22) ein Mengendurchsatzsensor ist.

8. Brennkraftmaschine nach einem der Ansprüche 5 bis 7, **dadurch gekennzeichnet, dass** zur Lageerkennung an der Drosselklappe ein Potentiometer angeordnet ist.

9. Brennkraftmaschine nach einem der Ansprüche 5 bis 7, **dadurch gekennzeichnet, dass** zur Lageerkennung an der Drosselklappe ein Schrittmotor angeordnet ist.

10. Brennkraftmaschine nach einem der Ansprüche 5 bis 9, **dadurch gekennzeichnet, dass** die Steuereinheit (39) in die Brennkraftmaschinensteuerung integriert ist.

11. Brennkraftmaschine nach einem der Ansprüche 5 bis 10, wobei eine Zuführung (23) der Sekundärluftleitung (22) in die Abgasanlage (12) vor dem Katalysator (15) vorgesehen ist, **dadurch gekennzeichnet, dass** eine zweite Zuführung (23a) in die Abgasanlage nach dem Katalysator vorgesehen ist, wobei ein Stellorgan (44) zur Auswahl der gewünschten Zuführung in der Sekundärluftleitung angeordnet ist.

## Revendications

1. Procédé permettant de régler simultanément :
- un flux d'air d'admission (24) d'un moteur à combustion interne (10) à l'aide d'un clapet d'étranglement (14) dans le chemin d'admission (11), en prenant en compte un flux d'air de contournement (19) dirigé par une turbine (18) connectée parallèlement au clapet d'étranglement et qui fait ainsi partie du flux d'air d'admission, et
- un flux d'air secondaire (21) généré par un compresseur (20) entraîné par la turbine (18), qui est acheminé vers un circuit d'échappement (12) du moteur à combustion interne, le circuit d'échappement présentant un catalyseur,
**caractérisé en ce qu'**
un appareil de commande (39) reçoit un signal d'air secondaire provenant d'un capteur de conduite d'air secondaire (42a) ainsi qu'un signal relatif à la position du clapet d'étranglement (14), ces signaux étant exploités dans l'appareil de commande (39) et, en fonction de l'exploitation dans l'appareil de commande (39), le flux d'air secondaire (21) est commandé par l'appareil de commande au moyen d'une soupape de commande (38a).

2. Procédé selon la revendication 1,
**caractérisé en ce que**
lors de l'ouverture du clapet d'étranglement (14), en cas de besoin croissant en air du moteur à combustion interne, la soupape de commande (38a, 41) est également ouverte afin de garantir une alimentation suffisante en air secondaire.

3. Procédé selon la revendication 2,
**caractérisé en ce que**
lorsque le flux d'air secondaire (21) est insuffisant, on réduit l'arrivée de carburant du moteur à combustion interne.

4. Procédé selon l'une des revendications précédentes,
**caractérisé en ce que**
le flux d'air secondaire (21) est amené, au moyen d'un organe de réglage (44), avant ou après le catalyseur du circuit d'échappement (12).

5. Moteur à combustion interne (10) comprenant un chemin d'admission (11) et un circuit d'échappement (12), dans lequel
- le circuit d'échappement présente un catalyseur (15) et au moins une arrivée (23) pour une conduite d'air secondaire (22),
- le chemin d'admission présente un clapet d'étranglement (14) et une conduite de contournement (16) s'étendant parallèlement au clapet d'étranglement, dans laquelle est disposée une turbine (18) pouvant être traversée,
- la turbine (18) est couplée mécaniquement à un compresseur (20), à la sortie d'air comprimé duquel est raccordée la conduite d'air secondaire,
**caractérisé en ce qu'**
une unité de commande (39) présente au moins :
- une entrée pour un signal d'air secondaire ou un signal d'air de contournement, reliée à un capteur (42a) disposé dans la conduite d'air secondaire (22) ou à un capteur (42c) disposé dans la conduite de contournement (16),
- une entrée pour un signal de position provenant d'une détection de position au niveau du clapet d'étranglement (14),
- une sortie pour un signal de commande relié à une soupape de commande (41, 38a),
- la soupape de commande étant disposée dans la conduite de contournement (16) ou dans la conduite d'air secondaire (22) de sorte que le flux d'air secondaire (21) soit commandé selon une exploitation des signaux entrants.

6. Moteur à combustion interne selon la revendication 5,
**caractérisé en ce que**
le capteur (42a, 42c) situé dans la conduite d'air secondaire (22) est un capteur de pression.

7. Moteur à combustion interne selon la revendication 5,
**caractérisé en ce que**
le capteur (42a, 42c) situé dans la conduite d'air secondaire (22) est un débitmètre.

8. Moteur à combustion interne selon l'une des revendications 5 à 7,
**caractérisé en ce qu'**
un potentiomètre est disposé au niveau du clapet d'étranglement pour la détection de position.

9. Moteur à combustion interne selon l'une des revendications 5 à 7,
**caractérisé en ce qu'**
un moteur pas-à-pas est disposé au niveau du clapet d'étranglement pour détecter la position.

10. Moteur à combustion interne selon l'une des revendications 5 à 9,
**caractérisé en ce que**
l'unité de commande (39) est intégrée dans la commande du moteur à combustion interne.

11. Moteur à combustion interne selon l'une des revendications 5 à 10, dans lequel l'arrivée (23) de la conduite d'air secondaire (22) débouche dans le circuit d'échappement (12) avant le catalyseur (15),
**caractérisé en ce qu'**
une deuxième arrivée (23a) dans le circuit d'échappement débouche après le catalyseur, un organe de réglage (44) étant disposé dans la conduite d'air secondaire pour sélectionner l'arrivée souhaitée.

## Claims

1. Method for the simultaneous adjusting of
- an intake air flow (24) for an internal combustion engine (10) by means of a throttle flap (14) that is accommodated in the intake tract (11) taking into account a by-pass air flow (19) which is conducted through a turbine (18), which is connected in parallel with the throttle flap and is consequently part of the intake air flow, and
- a secondary air flow (21), which is generated by a compressor (20), which is driven by the turbine (18) and is supplied to an exhaust gas system (12) of the internal combustion engine, wherein the exhaust gas system includes a catalytic converter,
**characterised in that** in a control device (39) a secondary air signal is detected by a secondary air line sensor (42a) along with a signal concerning the position of the throttle flap (14), wherein these signals are evaluated in the control device (39) and, in dependence on the evaluation in the control device (39), the secondary air flow (21) through the control device is controlled by means of a control valve (38a).

2. Method according to claim 1, **characterised in that** when the throttle flap (14) is open and the internal combustion engine requires more air, the control valve (38a, 41) is also opened in order to ensure a sufficient supply of secondary air.

3. Method according to claim 2, **characterised in that** where the secondary air flow (21) is insufficient, the fuel supply to the internal combustion engine is reduced.

4. Method according to one of the preceding claims, **characterised in that** the secondary air flow (21) is added by means of a control member (44) upstream or downstream of the catalytic converter of the exhaust gas system (12).

5. Internal combustion engine (10) having an intake tract (11) and an exhaust gas system (12), wherein
- the exhaust gas system includes a catalytic converter (15) and at least one supply (12) for a secondary air line (22),
- the intake tract includes a throttle flap (14) and a by-pass line (16), which extends parallel to the throttle flap and in which a turbine (18) is disposed so as to be traversable,
- the turbine (18) is mechanically coupled to a compressor (20) and the secondary air line is connected to the outlet for the compressed air of the said compressor, **characterised in that** a control unit (39) is provided, which includes at least
- one input for a secondary air signal or a by-pass air signal, which is connected to a sensor (42a) in the secondary air line (22) or a sensor (42c) in the by-pass line (16),
- one input for a position signal originating from a positional detecting means at the throttle flap (14) and
- one output for a control signal, which is connected to a control valve (41, 38a), wherein,
- the control valve is mounted in the by-pass line (16) or in the secondary air line (22) in such a manner that the secondary air flow (21) is controlled via an evaluation of the incoming signals.

6. Internal combustion engine according to claim 5, **characterised in that** the sensor (42a, 42c) in the secondary air line (22) is a pressure sensor.

7. Internal combustion engine according to claim 5, **characterised in that** the sensor (42a, 42c) in the secondary air line (22) is a throughput sensor.

8. Internal combustion engine according to one of claims 5 to 7, **characterised in that** a potentiometer is disposed at the throttle flap for positional detecting.

9. Internal combustion engine according to one of claims 5 to 7, **characterised in that** a stepping motor is disposed at the throttle flap for positional detecting.

10. Internal combustion engine according to one of claims 5 to 9, **characterised in that** the control unit (39) is incorporated into the internal combustion engine controlling means.

11. Internal combustion engine according to one of claims 5 to 10, wherein a supply (23) of the secondary air line (22) into the exhaust gas system (12) is provided upstream of the catalytic converter (15), **characterised in that** a second supply (23a) into the exhaust gas system is provided downstream of the catalytic converter, wherein a control member (44) is disposed in the secondary air line for the selection of the desired supply.
